# EUROPEAN PATENT APPLICATION

(11) **EP 4 270 204 A1**
(43) Date of publication of application: **01.11.2023**
(21) Application number: 21914387.2
(22) Date of filing: 28.12.2021
(51) Int. Cl.: G06F 13/38, G06F 9/50

(54) **MULTI-CLOUD INTERFACE ADAPTATION METHOD AND SYSTEM BASED ON MICRO-SERVICE, AND STORAGE MEDIUM**

(30) Priority: 30.12.2020 CN 202011612974
(71) Applicant: ZTE Corporation, Shenzhen, Guangdong 518057 (CN)
(72) Inventor: YANG, Xiang, Shenzhen, Guangdong 518057 (CN)
(74) Representative: Savi, Massimiliano
(86) International application number: PCT/CN2021/142052
(87) International publication number: WO 2022/143653

(57) **Abstract**

A multi-cloud interface adaptation method and system based on a micro-service, and a storage medium. By means of the method, a resource management micro-service unit provides a unified management interface service, and a traditional monolithic application is replaced by an interface adaptation micro-server of a micro-service architecture, such that corresponding conversion and encapsulation are respectively performed on user requests for different target cloud environment interfaces.

## Description

### CROSS-REFERENCE TO RELATED APPLICATION

This application is filed on the basis of Chinese patent application No. 202011612974.7 filed December 30, 2020, and claims priority to the Chinese patent application, the entire contents of which are incorporated herein by reference.

### TECHNICAL FIELD

Embodiments of the present disclosure relate to the technical field of cloud platforms, and in particular to a microservice-based multi-cloud interface adaptation method and system, and a storage medium.

### BACKGROUND

With the development of cloud computing technologies, there has been a debate about which cloud deployment model is most suitable for organizations. More and more application scenarios show that due to different needs and goals of enterprises and industries, it is difficult to rely on a single type of cloud platform for all application scenarios. Therefore, "Hybrid Cloud" and "Multi-Cloud" strategies came into being.

Both the mutli-cloud and hybrid cloud strategies involve multiple independent cloud environments. Each cloud provider has its own set of management tools for key operation and maintenance tasks. Cloud platforms differ significantly in the operation and calling of key operation and maintenance functions such as cloud resource management and cloud usage monitoring. Enterprise administrators usually need a tool that can span multiple clouds and focus on operation and maintenance tasks to meet the operation and maintenance requirements of different cloud platforms.

However, in some cases, the adaptation technology between mutli-cloud platforms still has the following defects.

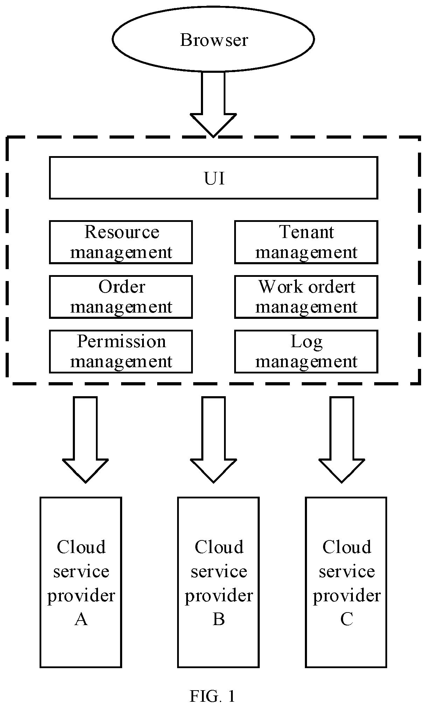

In some cases, the adaptation technology between mutli-cloud platforms is usually implemented based on a single software architecture, as shown in FIG. 1. In some cases, all functions of a cloud management platform are integrated in a war package, and there are basically no external dependencies except the WEB container. According to different provider types, the cloud management platform needs to construct different request bodies, call different interfaces, and perform different service logic processing for different cloud platforms. In practical use, redundant and repetitive codes are usually deployed, leading to unsatisfactory system robustness, excessive coupling, and low scalability and flexibility, making it inconvenient for update and maintenance, and failing to meet the requirements for rapid deployment.

### SUMMARY

In view of the above, embodiments of the present disclosure provide a microservice-based multi-cloud interface adaptation method and system, and a storage medium.

An embodiment of the present disclosure provides a microservice-based multi-cloud interface adaptation method. The method includes: calling an interface defined by an interface adaptation microserver after receiving a user request, and transmitting the user request to the interface adaptation microserver, to trigger the interface adaptation microserver to execute the following operations in response to the user request: converting and encapsulating the user request to generate a resource access request, and sending the resource access request to a corresponding cloud environment interface; and after receiving a response result returned by the cloud environment interface, converting the response result into response information in a standard format for display to a user.

An embodiment of the present disclosure further provides a microservice-based multi-cloud interface adaptation system. The system includes: a resource management microservice unit and an interface adaptation microserver. The resource management microservice unit is configured for calling an interface defined by the interface adaptation microserver after receiving a user request, and transmitting the user request having a target cloud environment interface identifier and standard request parameter information to the interface adaptation microserver. The interface adaptation microserver is configured for: converting and encapsulating the standard request parameter information in the user request according to a standard format corresponding to the target cloud environment interface identifier to generate a resource access request, and sending the resource access request to a corresponding cloud environment interface. The interface adaptation microserver is further configured for: after receiving a response result returned by the cloud environment interface, converting the response result into response information in a standard format for display to a user. The resource management microservice and the interface adaptation microserver interact through a Northbound Representational State Transfer (REST) interface.

An embodiment of the present disclosure further provides a computer-readable storage medium, storing a computer program which, when executed by a processor, causes the processor to implement the microservice-based multi-cloud interface adaptation method described above. Additional features and advantages of the embodiments of the present disclosure will be set forth in the description which follows, and in part will be obvious from the description, or may be learned by the practice of the embodiments of the present disclosure.

### BRIEF DESCRIPTION OF DRAWINGS

The drawings are provided for a further understanding of the embodiments of the present disclosure, and constitute a part of the description. The drawings and the implementations of the present disclosure are used to illustrate the embodiments of the present disclosure, and are not used to limit the embodiments of the present disclosure. In the drawings:
FIG. 1 is a schematic diagram of an adaptation mode between mutli-cloud platforms implemented using an existing single architecture;
FIG. 2 is a schematic diagram of a microservice-based multi-cloud interface adaptation system according to an embodiment of the present disclosure;
FIG. 3 is a timing diagram of calling an interface adaptation microserver in a microservice-based multi-cloud interface adaptation method according to an embodiment of the present disclosure;

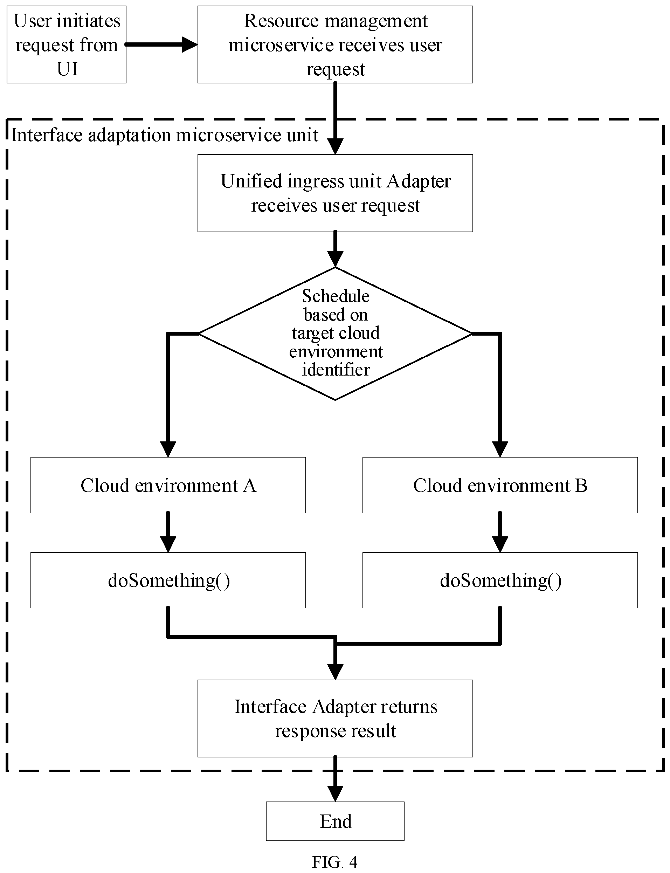

FIG. 4 is a schematic flowchart of a microservice-based multi-cloud interface adaptation method according to an embodiment of the present disclosure;
FIG. 5 is a schematic diagram of microservice-based horizontal scaling in a microservice-based mutli-cloud interface adaptation system according to an embodiment of the present disclosure; and
FIG. 6 is a schematic flowchart of operations of the horizontal scaling function shown in FIG. 5.

### DETAILED DESCRIPTION

To make the objectives and technical schemes of the embodiments of the present disclosure clear, the technical schemes of the embodiments of the present disclosure will be clearly and completely described below in conjunction with the accompanying drawings of the embodiments of the present disclosure. Apparently, the embodiments described are merely some not all the embodiments of the present disclosure. All other embodiments obtained by those having ordinary skills in the art based on the embodiments of the present disclosure without creative efforts shall fall within the protection scope of the present disclosure.

It may be understood by those having ordinary skills in the art that unless otherwise defined, all terms (including technical and scientific terms) used in the present disclosure have the same meanings as commonly understood by those having ordinary skills in the art. It should also be understood that terms such as those defined in a generic dictionary should be understood to have meanings consistent with those in the context of existing technologies, and are not to be interpreted in idealized or overly formal meanings unless defined as herein.

The term "connect" and its variants in the embodiments of the present disclosure may mean a direct connection between components or units or an indirect connection between components or units through another component.

An embodiment of the present disclosure provides a microservice-based multi-cloud interface adaptation method. The method includes: calling an interface defined by an interface adaptation microserver after receiving a user request, and transmitting the user request to the interface adaptation microserver, to trigger the interface adaptation microserver to execute the following operations in response to the user request: converting and encapsulating the user request to generate a resource access request, and sending the resource access request to a corresponding cloud environment interface; and after receiving a response result returned by the cloud environment interface, converting the response result into response information in a standard format for display to a user.

In some embodiments, in the microservice-based mutli-cloud interface adaptation method, the interface adaptation microserver includes a unified ingress unit, in which Northbound REST interfaces for different resources are defined to receive different user requests.

In some embodiments, in the microservice-based mutli-cloud interface adaptation method, the user request includes: at least one target cloud environment interface identifier, and standard request parameter information corresponding to a requested resource.

In some embodiments, in the microservice-based mutli-cloud interface adaptation method, the interface adaptation microserver further includes a message processing unit. The message processing unit is configured for: converting and encapsulating the standard request parameter information in the user request according to the standard format corresponding to the target cloud environment interface identifier to generate a resource access request, and sending the resource access request to a corresponding cloud environment interface. The message processing unit is further configured for: after receiving a response result returned by the cloud environment interface, converting the response result into response information in the standard format, where the standard format matches the cloud environment interface that returns the response result.

In some embodiments, in the microservice-based mutli-cloud interface adaptation method, after receiving the user request, the unified ingress unit calls an Application Programming Interface (API) corresponding to the message processing unit to transmit the corresponding target cloud environment interface identifier and standard request parameter information.

In some embodiments, in the microservice-based mutli-cloud interface adaptation method, the interface adaptation microserver has a plurality of replicas, each of which is separately executed by an independent operation unit and is registered with or de-registered from an API Gateway according to the following operations, where the API Gateway centrally distributes received user requests: triggering registration of a new replica and distributing a user request to the new replica when a determination is made that operational load of an existing replica exceeds an upper limit of a performance indicator in N consecutive judgment cycles; and stopping distribution of a user request to a replica with the lowest operational load and triggering de-registration of the replica when a determination is made that the operational load of the existing replica is lower than a lower limit of the performance indicator in N consecutive judgment cycles.

An embodiment of the present disclosure further provides a microservice-based multi-cloud interface adaptation system. The system includes: a resource management microservice unit and an interface adaptation microserver. The resource management microservice unit is configured for calling an interface defined by the interface adaptation microserver after receiving a user request, and transmitting the user request having a target cloud environment interface identifier and standard request parameter information to the interface adaptation microserver. The interface adaptation microserver is configured for: converting and encapsulating the standard request parameter information in the user request according to a standard format corresponding to the target cloud environment interface identifier to generate a resource access request, and sending the resource access request to a corresponding cloud environment interface. The interface adaptation microserver is further configured for: after receiving a response result returned by the cloud environment interface, converting the response result into response information in the standard format for display to a user. The resource management microservice and the interface adaptation microserver interact through a Northbound Representational State Transfer (REST) interface.

In some embodiments, in the microservice-based mutli-cloud interface adaptation system, there are at least two interface adaptation microservers, each of which runs independently based on a container and is registered with or de-registered from an API Gateway according to the following operations, where the API Gateway centrally distributes received user requests: triggering registration of a new interface adaptation microserver and distributing a user request to the new interface adaptation microserver when a determination is made that operational load of an existing interface adaptation microserver exceeds an upper limit of a performance indicator in N consecutive judgment cycles; and stopping distribution of a user request to an interface adaptation microserver with the lowest operational load and triggering de-registration of the interface adaptation microserver when a determination is made that the operational load of the existing interface adaptation microserver is lower than a lower limit of the performance indicator in N consecutive judgment cycles.

In some embodiments, in the microservice-based mutli-cloud interface adaptation system, each of the interface adaptation microservers includes: a unified ingress unit, in which Northbound REST interfaces for different resources are defined to receive different user requests; and a message processing unit, interacting with the unified ingress unit through an Application Programming Interface, and configured for: converting and encapsulating the standard request parameter information in the user request according to the standard format corresponding to the target cloud environment interface identifier to generate a resource access request, and sending the resource access request to a corresponding cloud environment interface; and after receiving a response result returned by the cloud environment interface, converting the response result into response information in the standard format.

An embodiment of the present disclosure further provides a computer-readable storage medium, storing a computer program which, when executed by a processor, causes the processor to implement the microservice-based multi-cloud interface adaptation method described above.

FIG. 1 shows an existing cloud management platform based on a single software architecture. All functions of the cloud management platform are integrated in a war package, and there are basically no external dependencies except the WEB container. This architecture has prominent advantages and disadvantages. To be specific, this architecture has the advantages of centralized management, simple development, and no loss of distributed calling, but also has the prominent disadvantages of poor system robustness, excessive coupling with the system, and low scalability and flexibility, failing to meet the requirements for rapid deployment.

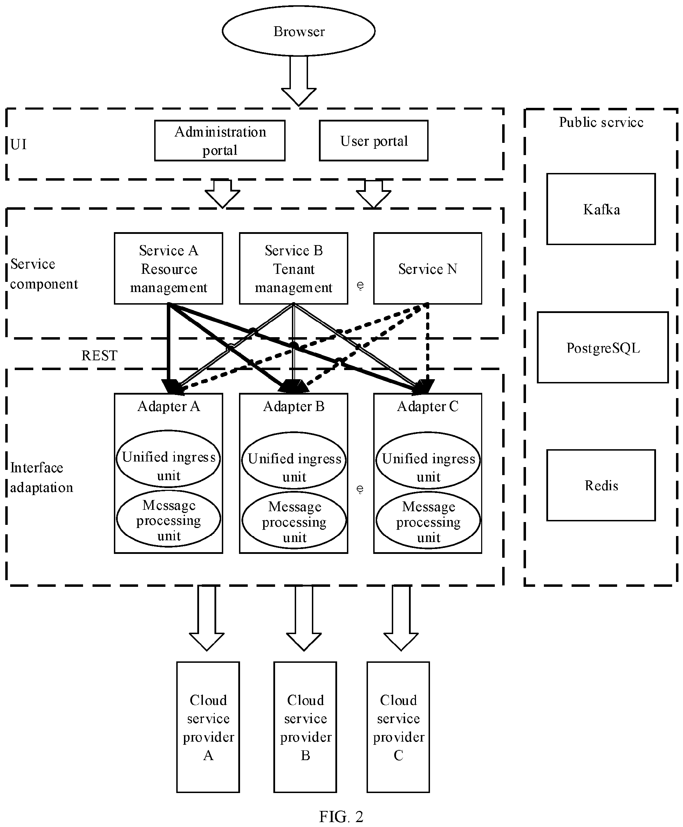

Referring to FIG. 2, an embodiment of the present disclosure first provides a microservice-based multi-cloud interface adaptation system, including a plurality of resource management microservice units.

The plurality of resource management microservice units are provided in a service layer and each configured for calling an interface defined by an interface adaptation microserver after receiving a user request, and transmitting the user request having a target cloud environment interface identifier and standard request parameter information to the interface adaptation microserver.

The system further includes a plurality of interface adaptation microservers each running based on a container and being horizontally scalable. Each of the interface adaptation microservers is configured for: in response to calling by a resource management microservice unit, converting and encapsulating the standard request parameter information included in the user request according to a standard format corresponding to the target cloud environment interface identifier to generate a resource access request, and sending the resource access request to a corresponding cloud environment interface. Each of the interface adaptation microservers is further configured for: after receiving a response result returned by the cloud environment interface, converting the response result into response information in a standard format for display to a user. The standard format corresponding to the response information may be matched based on the cloud environment interface that returns the response result. Alternatively, based on a third-party application or a User Interface (UI) module that retrieves the response information, a general data standard among different applications or UI modules may be directly set, and the response result is converted according to the data standard.

As shown in FIG. 2, the UI module in the system is configured for receiving a resource access request sent by a client and sending the user request to a corresponding service component module.

A proxy or API Gateway is generally provided between N resource management microservice units in the background of the service component module and an UI. The proxy or API Gateway has a function of providing aggregation of background services for the foreground, and provide a unified service egress to realize decoupling between them.

The service component module in the system is configured for receiving and processing the user request sent by the UI module, where the user request needs to carry at least one target cloud environment interface identifier and standard request parameter information corresponding to a requested resource.

The interface adaptation microserver is configured for receiving the user request sent by each service component module, converting and encapsulating the standard request parameter information according to the cloud environment interface identifier and the standard request parameter information carried in the request and based on a standard format required by different types of cloud environment interfaces to generate a resource access request, and then sending the request to the corresponding cloud environment interface. The interface adaptation microserver is further configured for: after receiving a response result returned by the cloud environment interface, converting the response result into response information in the standard format, so that the third-party application or the UI module displays a result of the resource access request to the user according to the response information.

The interface adaptation microserver may be further divided into two sub-units, namely, a unified ingress unit and a message processing unit.

The unified ingress unit defines Northbound Representational State Transfer (REST) interfaces (which are interfaces for manufacturers or operators to access and manage networks, i.e., interfaces symbolizing an upward flow) matching various resources, such as cloud host-related interfaces, cloud hard disk-related interfaces, cloud mirror-related interfaces, etc., to receive different types of user requests.

The message processing unit is configured for processing parameter information in the user request, including: determining a standard format for different cloud environment interfaces according to the target cloud environment interface identifier, then encapsulating the standard request parameter information in the user request according to the standard format to generate a resource access request, and calling an interface corresponding to the cloud environment interface to send the resource access request to a corresponding cloud. In addition, after receiving response result data from the cloud environment interface to the request, the message processing unit further needs to convert response results from different cloud environment interfaces into response information in the unified standard format. The unified ingress unit and the message processing unit may interact through an Application Programming Interface (API).

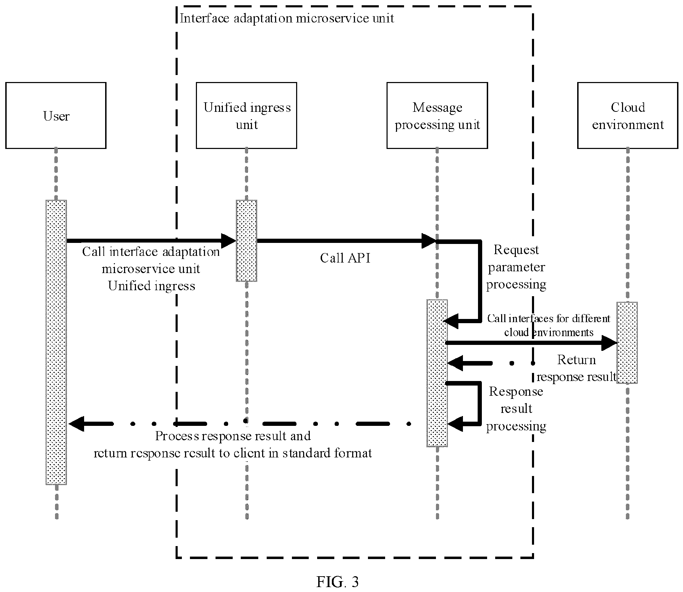

Referring to a timing diagram in FIG. 3, the system may operate by performing the following steps S 1 to S4.

At S 1, the service component in the service layer calls an interface defined by the unified ingress unit in the interface adaptation microserver after receiving a user request through the UI, and transmits the user request to the interface adaptation microserver, to trigger the interface adaptation microserver to execute S2 to S4 in response to the user request.

At S2, after receiving the user request, the unified ingress unit in the interface adaptation microserver calls an API corresponding to the message processing unit, to trigger the message processing unit to process a parameter in the user request, convert and encapsulate the parameter according to a standard format of a cloud environment interface corresponding to the user request to generate a resource access request.

At S3, the message processing unit sends the resource access request to the corresponding cloud environment interface according to the cloud environment interface identifier.

At S4, the message processing unit converts a response result returned by the cloud environment interface into a unified standard format, and returns the response information to a client.

The microservice architecture can decompose functions into discrete services to reduce the coupling of the system and provides more flexible service support. Therefore, the plurality of interface adaptation microservers based on the microservice architecture in the embodiments of the present disclosure can extract and decouple an interface calling layer from the service layer and provide the interface calling layer as a separate interface adaptation service, thereby achieving independent development, management, and iteration of the module.

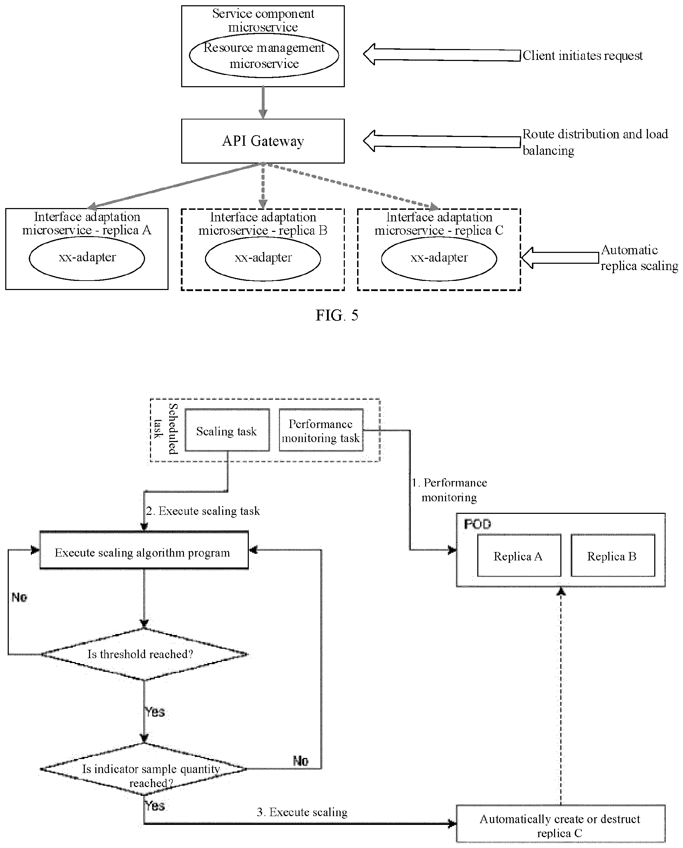

The interface adaptation microserver used in the schemes of the embodiments of the present disclosure is a stateless microservice, which is horizontally scalable. A plurality of interface adaptation microserver replicas share the traffic, with each replica being separately executed by an independent operation unit in a container. The replicas are called through coordination of a Central Processing Unit (CPU) and memory to implement processing of corresponding parameters in the user request. Therefore, in some other implementations of the embodiments of the present disclosure, load balancing and fuse management functions under the architecture shown in FIG. 5 can further be provided based on a routing algorithm shown in FIG. 6 by the API Gateway provided between N resource management microservice units in the background of the service component module and the UI, to realize a balanced distribution of client requests among different instances and ensure that the normal operation of the system will not be affected even if one of the microservices goes offline due to a fault.

Specific operations are as follows.

1: In a system startup stage, parameters of a mutli-cloud adaptation microservice scaling policy are set. Upper and lower thresholds for performance indicators such as CPU usage and memory usage are set. A judgment cycle is set. Parameters such as an indicator sample quantity N and upper and lower limits for an interface adaptation microserver replica quantity are set. Considering that initially there is small traffic, generally only one replica needs to be registered with the API Gateway, and the API Gateway centrally distributes received user requests to the replica for traffic processing.

The above parameters may be defined as follows.

Upper and lower thresholds: which are upper limit values and lower limit values for performance indicators such as CPU usage and memory usage, and are used for determining operational load of an existing interface adaptation microserver.

Judgment cycle: which is a time interval for determining the operational load.

Indicator sample quantity: which is a quantity of judgment cycles for determining whether scaling needs to be triggered. When a determination is made that the operational load exceeds the upper limit or the lower limit for N consecutive judgment cycles, a scaling mechanism is triggered.

Upper and lower limits for replica quantity: which are upper and lower limits of the quantity of microservice replicas.

2: The API Gateway is configured for centrally distributing all user requests and serves as a load balancer. All interface adaptation microserver replicas need to register with the API Gateway.

3: A performance monitoring task is executed to monitor CPU usage and memory usage of a replica. When the number of external user requests increases and load of a single interface adaptation microserver replica is too high, and if it is determined in N judgment cycles that the number of times that the CPU usage reaches the upper threshold has reached the indicator sample quantity N, the scaling mechanism is triggered to automatically register a new replica with the API Gateway. The API Gateway distributes user requests to the new interface adaptation microserver to offload the external traffic. Correspondingly, when a determination is made that operational load of the existing interface adaptation microserver is lower than the lower limit of the performance indicator in N consecutive judgment cycles, distribution of a user request to an interface adaptation microserver with the lowest operational load is stopped and de-registration of the interface adaptation microserver is triggered.

A detailed process is shown in FIG. 6. In the above scaling mechanism, monitoring of CPU usage and memory usage may be respectively implemented as a performance monitoring task which is triggered repeatedly based on the judgment cycle. After an exception is detected by the performance monitoring task, a scaling check task is triggered to check whether the frequency or duration of the exception of the performance indicator reaches the set indicator sample quantity. If not, the scaling check task ends, and the performance monitoring task is executed again to continue the monitoring in a next cycle. Otherwise, a specific scaling task is executed to automatically register or de-register a replica to increase or reduce the number of replicas. The replicas may be sorted in an ascending order of CPU usage, and the replica with the lowest CPU usage is preferentially destructed, to reduce system overheads. The non-destructed replicas keep masking differences between cloud environment interfaces of different cloud service providers in the following manner to send and respond to user requests, which includes the following steps S 1 to S5.

At S 1, a resource access request initiated by a user from a UI is received through a resource management microservice. The resource access request is, for example, a request for creating a virtual machine, and carries a parameter such as a virtual machine name, a mirror ID, a specification ID, a network ID, etc. Then, a Northbound REST interface defined by a unified ingress unit of an interface adaptation microserver is selected and called according to a routing algorithm.

At S3, the unified ingress unit in the interface adaptation microserver receives the corresponding user request.

At S4, the unified ingress unit calls an API corresponding to the message processing unit to transmit a target cloud environment interface identifier and standard request parameter information that correspond to the user request.

At S5, an abstract factory IBaseFactory is defined in the message processing unit, and a specific factory implementation, e.g., OpenStackFactory/AliCloudFactory, is acquired according to a cloud environment interface type (DcType) corresponding to different target cloud environment interface identifiers.

In the specific factory implementation of the message processing unit, specific implementation classes of various resources are defined, such as CreateInstanceImpl, CreateImageImpl, CreateVolumeImpl, etc. These implementation classes are used for constructing the corresponding standard request parameter information in the user request into a standard request body corresponding to a type of a target cloud environment interface to generate a resource access request, and then calling an interface corresponding to the target cloud environment interface to send the resource access request to the corresponding cloud environment interface.

At S5, after acquiring response results of different types of cloud environment interfaces to the user request, the message processing unit further masks differences between different cloud environment interfaces through conversion between adaptation response parameter information and standard response parameter information, i.e., converts the response results into response information in the standard format. Therefore, an upper layer service can directly acquire responses in a unified format through the operation of the message processing unit, thereby greatly improving the development efficiency.

Therefore, the embodiments of the present disclosure can solve the problem that a single microservice cannot bear high concurrent traffic in actual production scenarios. In some embodiments, horizontal scaling of microservices is performed according to the traffic volume, to use a plurality of microservice replicas to jointly bear the traffic. In the implementation using threshold-based rules in the embodiments of the present disclosure, the number of instances can be dynamically increased or decreased based on performance indicators such as CPU usage and memory usage. In this way, when the operational load is high, the number of interface adaptation microserver replicas can be increased, to use a plurality of microservice replicas to jointly bear the traffic. When the operational load is low, the number of interface adaptation microserver replicas can be decreased to reduce system overheads.

In the embodiments of the present disclosure, a resource management microservice unit is used to provide a unified management interface service, and a conventional monolithic application is replaced by an interface adaptation microserver using a microservice architecture, so that corresponding conversion and encapsulation are performed on user requests according to different target cloud environment interfaces. The embodiments of the present disclosure can mask interface differences between cloud environment interfaces of different cloud service providers, support rapid iterative deployment and horizontal scaling based on the microservice architecture, and realize the management of a plurality of clouds using one set of tools, thereby simplifying mutli-cloud management operations and reducing mutli-cloud maintenance costs.

In addition, in the embodiments of the present disclosure, considering that a single microservice often cannot bear high concurrent traffic, the API Gateway is further used to dynamically manage the horizontal scaling of microservices according to the traffic volume. With the use of the threshold-based rules in the embodiments of the present disclosure, when the operational load is high, the number of interface adaptation microserver replicas can be increased, to use a plurality of microservice replicas to jointly bear the traffic. When the operational load is low, the number of interface adaptation microserver replicas can be decreased to reduce system overheads.

The above-described embodiments are merely illustrative of several implementations of the present disclosure, and the detailed description is not to be construed as limiting the scope of the embodiments of the present disclosure. It should be pointed out that for those having ordinary skills in the art, several variations and improvements can be made without departing from the concept of the embodiments of the present disclosure, which all fall within the protection scope of the embodiments of the present disclosure.

## Claims

1. A microservice-based multi-cloud interface adaptation method, comprising:
calling an interface defined by an interface adaptation microserver after receiving a user request, and transmitting the user request to the interface adaptation microserver, to trigger the interface adaptation microserver to execute the following operations in response to the user request:
converting and encapsulating the user request to generate a resource access request, and sending the resource access request to a corresponding cloud environment interface; and
after receiving a response result returned by the cloud environment interface, converting the response result into response information in a standard format for display to a user.

2. The microservice-based multi-cloud interface adaptation method of claim 1, wherein the interface adaptation microserver comprises a unified ingress unit, in which Northbound REST interfaces for different resources are defined to receive different user requests.

3. The microservice-based multi-cloud interface adaptation method of claim 2, wherein the user request comprises: at least one target cloud environment interface identifier, and standard request parameter information corresponding to a requested resource.

4. The microservice-based multi-cloud interface adaptation method of claim 3, wherein the interface adaptation microserver further comprises a message processing unit;
the message processing unit is configured for: converting and encapsulating the standard request parameter information in the user request according to the standard format corresponding to the target cloud environment interface identifier to generate a resource access request, and sending the resource access request to a cloud environment interface corresponding to the target cloud environment interface identifier; and
the message processing unit is further configured for: after receiving a response result returned by the cloud environment interface, converting the response result into response information in the standard format, wherein the standard format matches the cloud environment interface which returns the response result.

5. The microservice-based multi-cloud interface adaptation method of claim 4, wherein after receiving the user request, the unified ingress unit calls an Application Programming Interface corresponding to the message processing unit to transmit the corresponding target cloud environment interface identifier and standard request parameter information.

6. The microservice-based multi-cloud interface adaptation method of claim 1, wherein the interface adaptation microserver has a plurality of replicas, each of which is separately executed by an independent operation unit and is registered with or de-registered from an API Gateway according to the following operations, the API Gateway centrally distributing received user requests:
triggering registration of a new replica and distributing a user request to the new replica, in response to a determination that operational load of an existing replica exceeds an upper limit of a performance indicator in N consecutive judgment cycles; and
stopping distribution of a user request to a replica with the lowest operational load and triggering de-registration of the replica, in response to a determination that operational load of the existing replica is lower than a lower limit of the performance indicator in N consecutive judgment cycles.

7. A microservice-based mutli-cloud interface adaptation system, comprising:
a resource management microservice unit, configured for calling an interface defined by an interface adaptation microserver after receiving a user request, and transmitting the user request having a target cloud environment interface identifier and standard request parameter information to the interface adaptation microserver; and
an interface adaptation microserver, configured for: converting and encapsulating the standard request parameter information in the user request according to a standard format corresponding to the target cloud environment interface identifier to generate a resource access request, and sending the resource access request to a corresponding cloud environment interface; wherein the interface adaptation microserver is further configured for: after receiving a response result returned by the cloud environment interface, converting the response result into response information in the standard format for display to a user; and
wherein the resource management microservice and the interface adaptation microserver interact through a Northbound REST interface.

8. The microservice-based multi-cloud interface adaptation system of claim 7, wherein at least two interface adaptation microservers are provided, each of which runs independently based on a container and is registered with or de-registered from an API Gateway according to the following operations, the API Gateway centrally distributing received user requests:
triggering registration of a new interface adaptation microserver and distributing a user request to the new interface adaptation microserver, in response to a determination that operational load of an existing interface adaptation microserver exceeds an upper limit of a performance indicator in N consecutive judgment cycles; and
stopping distribution of a user request to an interface adaptation microserver with the lowest operational load and triggering de-registration of the interface adaptation microserver, in response to a determination that the operational load of the existing interface adaptation microserver is lower than a lower limit of the performance indicator in N consecutive judgment cycles.

9. The microservice-based multi-cloud interface adaptation system of claim 7, wherein each of the interface adaptation microservers comprises:
a unified ingress unit, in which Northbound REST interfaces for different resources are defined to receive different user requests; and
a message processing unit, interacting with the unified ingress unit through an Application Programming Interface, and configured for: converting and encapsulating the standard request parameter information in the user request according to the standard format corresponding to the target cloud environment interface identifier to generate a resource access request, and sending the resource access request to a corresponding cloud environment interface; wherein the message processing unit is further configured for: after receiving a response result returned by the cloud environment interface, converting the response result into response information in the standard format.

10. A computer-readable storage medium, storing a computer program which, when executed by a processor, causes the processor to perform the microservice-based multi-cloud interface adaptation method of any one of claims 1 to 6.
